(19) Europäisches Patentamt European Patent Office Office européen des brevets

(11) **EP 4 506 661 A1**

(12) **EUROPEAN PATENT APPLICATION**

(43) Date of publication:
**12.02.2025 Bulletin 2025/07**

(21) Application number: **24179797.6**

(22) Date of filing: **04.06.2024**

(51) International Patent Classification (IPC):
*G01C 19/72* *(2006.01)*

(52) Cooperative Patent Classification (CPC):
**G01C 19/727**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 US 202363518863 P**
**13.05.2024 US 202418662707**

(71) Applicant: **Honeywell International Inc.**
**Charlotte, NC 28202 (US)**

(72) Inventors:
• **SANDERS, Glen A.**
  **Charlotte, 28202 (US)**
• **SMICIKLAS, Marc**
  **Charlotte, 28202 (US)**
• **STRANDJORD, Lee K.**
  **Charlotte, 28202 (US)**

(74) Representative: **Haseltine Lake Kempner LLP**
**Cheapside House**
**138 Cheapside**
**London EC2V 6BJ (GB)**

(54) **RFOG EMPLOYING SERRODYNE FREQUENCY SHIFTING**

(57) An RFOG includes a resonator and an optical signal source configured to produce optical signals. Further, the RFOG includes optical components that introduce a first and second optical signals derived from the optical signals for propagation within the resonator wherein the first and second optical signals propagate in opposite directions. Additionally, the RFOG includes serrodyne modulation electronics that generate a serrodyne modulation control signal, wherein a first and second serrodyne modulation signal are generated from the serrodyne modulation control signal, wherein a sign of a slope of the first serrodyne modulation signal is opposite a sign of a slope of the second serrodyne modulation signal, wherein the signs of the slopes of the first and second serrodyne modulation signals periodically switch. Moreover, the RFOG includes phase modulators that respectively phase modulate the first and second optical signals with the first and second serrodyne modulation signals before propagating in the resonator.

FIG. 4A

EP 4 506 661 A1

## Description

STATEMENT REGARDING FEDERALLY SPONSORED RESEARCH OR DEVELOPMENT

This invention was made with Government support under FA9453-20-C-0013 awarded by Air Force Research Laboratory. The Government has certain rights in the invention.

CROSS-REFERENCE TO RELATED APPLICATIONS

This application claims the benefit of Provisional Application having application number 63/518,863, which is titled "RFOG EMPLOYING SERRODYNE FREQUENCY SHIFTING," filed on August 10, 2023, which is hereby incorporated herein by reference in its entirety.

BACKGROUND

Gyroscopes (referred to herein as gyros) have been used to measure rotation rates or changes in angular velocity about an axis of rotation. A basic conventional fiber optic gyro (FOG) includes an optical source, a beam-generating device, and a coil of optical fiber coupled to the beam-generating device that encircles an area. The beam-generating device transmits light beams into the coil that propagate in a clockwise (CW) direction and a counterclockwise (CCW) direction along the core of the optical fiber. Many FOGs utilize glass-based optical fibers that guide light along a solid glass core of the fiber. The two counter-propagating (e.g., CW and CCW) beams experience different path lengths while propagating around a rotating closed optical path, and the difference in the two path lengths is proportional to the rotational rate that is normal to the enclosed area.

In a resonator fiber optic gyroscope (RFOG), the counter-propagating light beams are typically highly coherent and circulate through multiple turns of the fiber optic coil and for multiple passes through the coil using a device (such as a fiber coupler) that redirects a portion of the light that has passed through the coil back into the coil again (i.e., circulates the light). The beam-generating device modulates and/or shifts the frequencies of each of the counter-propagating light beams so that the resonance frequencies of the resonant coil may be observed. The resonance frequencies for each of the CW and CCW paths through the coil are based on a constructive interference condition, where all light waves traverse the coil a different number of times and are in phase or added constructively at any point in the coil. As a result of this constructive interference condition, optical waves having a particular wavelength can be referred to as "on resonance" when the round-trip resonator optical path length is equal to an integral number of wavelengths. Rotation about the axis of the coil produces a different optical path length for clockwise and counterclockwise propagation, thus producing a shift between the respective resonance frequencies of the resonator. The frequency difference, measured by tuning the CW beam and CCW beam frequencies to match the resonance frequency shift of the closed optical path due to rotation, can be used to determine the rotation rate.

SUMMARY

Systems and methods for an RFOG employing serrodyne frequency shifting are provided herein. In certain embodiments, an RFOG includes a fiber optic resonator. Also, the RFOG includes at least one optical signal source configured to produce at least one optical signal. Further, the RFOG includes a plurality of optical components configured to introduce a first optical signal derived from the at least one optical signal and a second optical signal derived from the at least one optical signal for propagation within the fiber optic resonator wherein the first optical signal and the second optical signal propagate in opposite directions. Additionally, the RFOG includes serrodyne modulation electronics configured to generate at least one serrodyne modulation control signal, wherein a first serrodyne modulation signal and a second serrodyne modulation signal are generated from the at least one serrodyne modulation control signal, wherein a sign of a slope of the first serrodyne modulation signal is opposite a sign of a slope of the second serrodyne modulation signal, wherein the sign of the slope of the first serrodyne modulation signal and the sign of the slope of the second serrodyne modulation signal periodically switch. Moreover, the RFOG includes a first phase modulator configured to phase modulate the first optical signal with the first serrodyne modulation signal before the first optical signal propagates within the fiber optic resonator; and a second phase modulator configured to phase modulate the second optical signal with the second serrodyne modulation signal before the second optical signal propagates within the fiber optic resonator.

BRIEF DESCRIPTION OF THE DRAWINGS

Drawings accompany this description and depict only some embodiments associated with the scope of the appended claims. Thus, the described and depicted embodiments should not be considered limiting in scope. The accompanying drawings and specification describe the exemplary embodiments and features thereof, with additional specificity and detail, in which:

FIG. 1 is a block diagram of an RFOG implementing serrodyne frequency shifting according to an aspect of the present disclosure;

FIG. 2 is a block diagram of an RFOG implementing serrodyne frequency shifting according to an aspect of the present disclosure;

FIG. 3 is a block diagram of an RFOG implementing serrodyne frequency shifting according to an aspect of the present disclosure;

FIGs. 4A and 4B are diagrams of serrodyne waveforms used for performing serrodyne frequency shifting according to an aspect of the present disclosure;

FIGs. 5A and 5B are diagrams illustrating the generation of error signals according to an aspect of the present disclosure;

FIG. 6 is a diagram illustrating a circuit for generating a serrodyne modulation control signal according to an aspect of the present disclosure;

FIGs. 7A and 7B are diagrams illustrating the generation of error signals according to an aspect of the present disclosure;

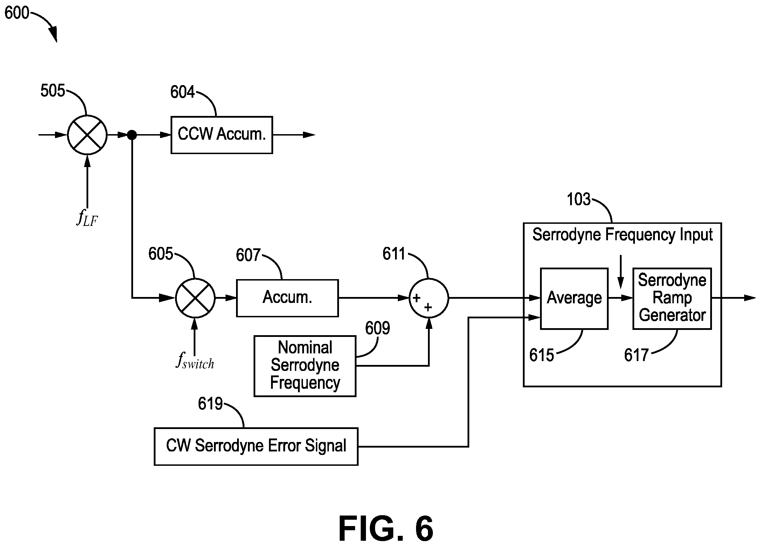

FIG. 6 is a diagram illustrating a circuit for generating a serrodyne modulation control signal according to an aspect of the present disclosure;

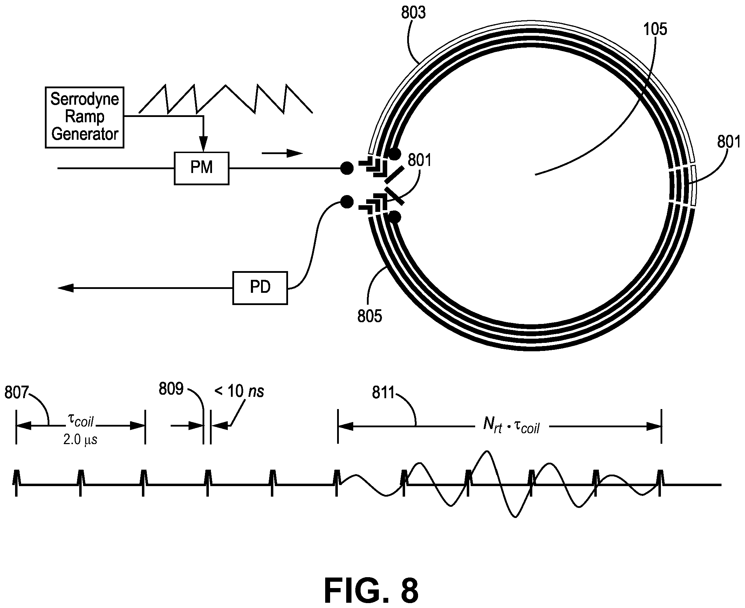

FIG. 8 is a diagram illustrating the propagation of signals around an RFOG according to an aspect of the present disclosure;

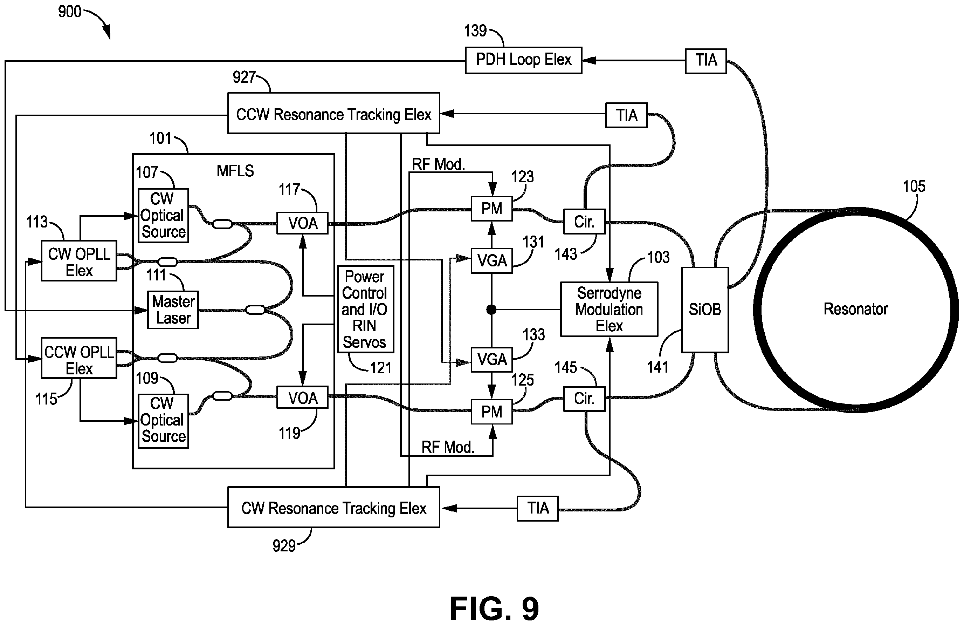

FIG. 9 is a block diagram of an RFOG implementing serrodyne frequency shifting according to an aspect of the present disclosure; and

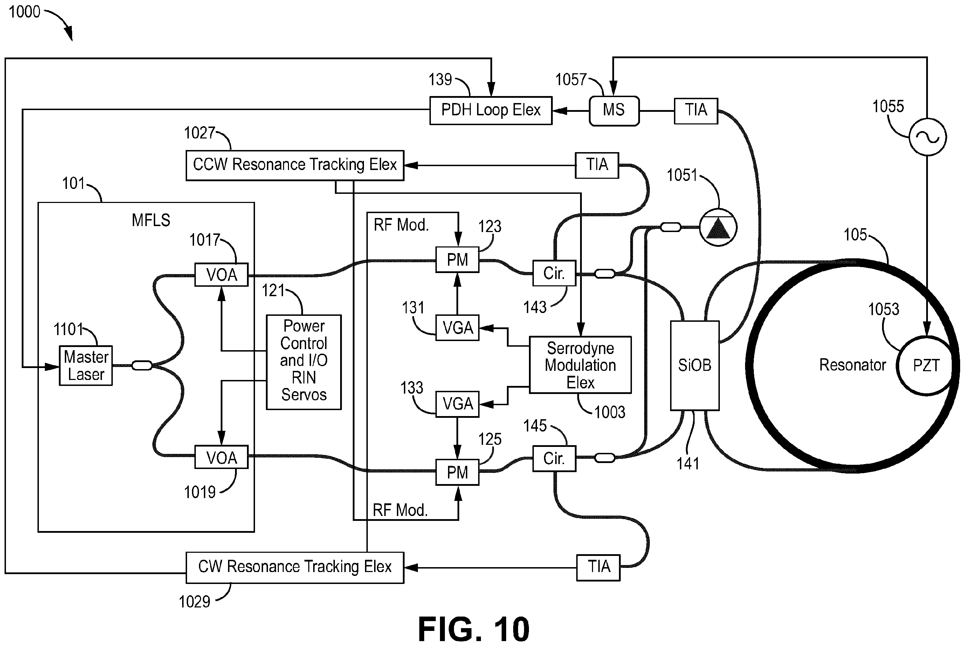

FIG. 10 is a block diagram of an RFOG implementing serrodyne frequency shifting using light from a master laser according to an aspect of the present disclosure; and

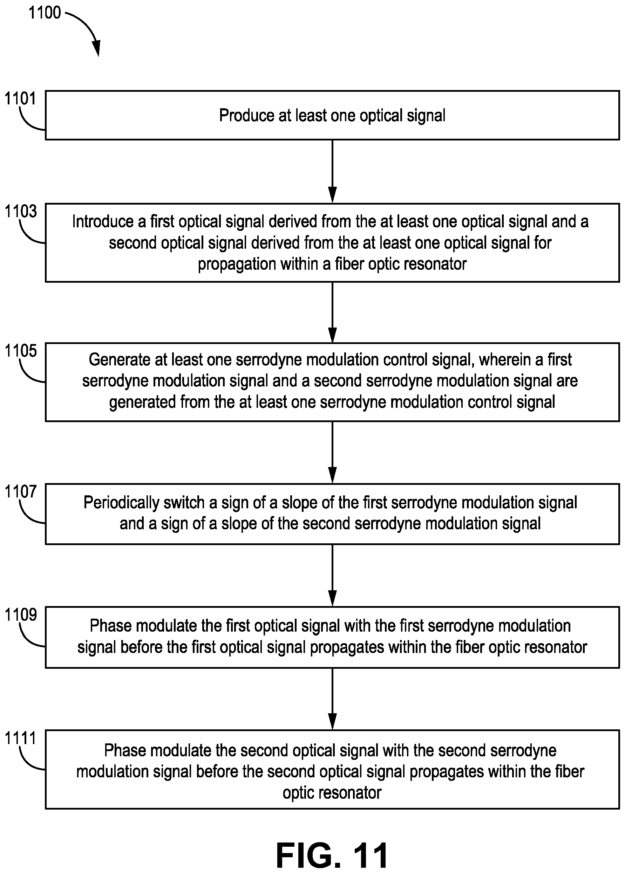

FIG. 11 is a flowchart diagram of a method for implementing serrodyne frequency switching according to an aspect of the present disclosure.

Per common practice, the drawings do not show the various described features according to scale, but the drawings show the features to emphasize the relevance of the features to the example embodiments.

DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems and embodiments described herein employ serrodyne frequency shifting within a resonator fiber optic gyroscope (RFOG). In particular, within an RFOG, a CW optical signal source generates a CW optical signal, and a CCW optical signal source generates a CCW optical signal. After generation, the CW optical signal is phase modulated by a CW serrodyne signal, and the CCW optical signal is phase modulated by a CCW serrodyne signal. The CW serrodyne signal has a slope with a different sign than the CCW serrodyne signal. For example, when the slope of the CW serrodyne signal is positive, the slope of the CCW serrodyne signal is negative. Further, the slopes of the CW serrodyne signal and the CCW serrodyne signal alternatingly switch according to a defined period.

Some RFOGs use resonance switching to produce measurements of the rotation rate frequency value that correct backscatter errors while compensating for free spectral range errors and line shape asymmetry gradient due to double optical backscatter. When performing resonance switching, two counter-propagating optical beams of the gyroscope are locked to different resonant modes of a resonator for a fixed period. Then, the frequencies of the optical beams are switched to swap resonant modes for a second period. Operation of the gyroscope continues by periodically alternating the optical beams between the two resonance modes. This operation can provide sufficient information for the gyroscope to calculate a rotation rate frequency value free from FSR and line shape asymmetry gradient error influences.

Some RFOGS use multi-frequency laser sources (MFLS) that employ optical filters. Additionally, some RFOGS that use master lasers for locking the frequencies of slave lasers may have master lasers coupled to one of the slave lasers instead of being directly fed into the resonator. When RFOGS do not include the optical filters within an MFLS, or when the master laser is coupled to the resonator as part of the Pound Drever Hall (PDH) loop, the resonance switching can be made sufficiently fast as to be nearly invisible to the PDH and other resonance tracking loops or doesn't affect the loops. Additionally, after a frequency switch, the new frequencies of the CW and CCW optical signals are well within the capture range of the PDH and resonance tracking loops, leading to little disturbance to the loops. Additionally, in the case where the master is coupled to the resonator, the PDH loop remains locked during the switch.

When an RFOG includes an MFLS employing optical filters and/or PDH tracking through one of the slave lasers, the operation of the optical filters may call for slower switching times (than desired for gyro operation) that are within the bandwidth of the optical filters so that the slow loop of the optical filter can keep the fast loop from saturating. Faster switch times are desired for low-noise performance in an RFOG. Because of the slow filter response, switching times have to be undesirably slow in these configurations. Additionally, the PDH loop may try to negate the slave laser resonance switch, unless the PDH loop is unlocked during the resonance switch. Further, the rotation rate information may be gated out during the resonance switch. When the switching duration is too long, too much rate information is gated out, leading to increased angle random walk (ARW). The resonance switching can be compensated for by increasing the bandwidth of the optical filter slow loop and/or briefly disabling the PDH loop during the resonance switch. However, adjusting the bandwidth or disabling the PDH loop can cause the RFOG to be more susceptible to external disturbances, such as acoustics.

In certain embodiments, the RFOG may include serrodyne modulation electronics that generate a CW serrodyne signal and a CCW serrodyne signal to perform serrodyne frequency shifting. The RFOG then modulates the CW optical signal with the CW serrodyne signal and the CCW optical signal with the CCW serrodyne signal. As mentioned above, the CW serrodyne signal has a slope with a different sign than the CCW serrodyne signal. For example, when the slope of the CW serrodyne signal is positive, the slope of the CCW serrodyne signal is negative. Further, the slopes of the CW serrodyne signal and the CCW serrodyne signal alternatingly switch according to a defined period.

As described herein, the serrodyne frequency shifting is performed after the optical filters. Because the serrodyne frequency shifting is performed after the optical filters, the performance of the serrodyne frequency shifting can be liberated from the constraints imposed by the optical filters. Without the optical filter constraints, changes in the serrodyne frequency can be performed at speeds well above the bandwidth of the PDH and resonance tracking loop. The speeds of changing the serrodyne frequency shift can be sufficiently fast such that resultant transients are nearly negligible in the control error signals of the PDH and resonance tracking loops. Among the changes in the serrodyne frequency shifts that can be made quickly is that associated with resonance switching, or alternating which resonance each laser is locked to. In addition, amplitude control schemes of the serrodyne frequency shifting reduce transients in the PDH and resonance tracking control signals. Further, the serrodyne frequency shifting may employ a $2\pi$ reset control method that reduces gyro scale factor errors. Additionally, using serrodyne frequency shifting, the CW optical signal and CCW optical signal can be generated by optical signal sources utilizing high-Q whispering gallery mode cavities and self-injection locking.

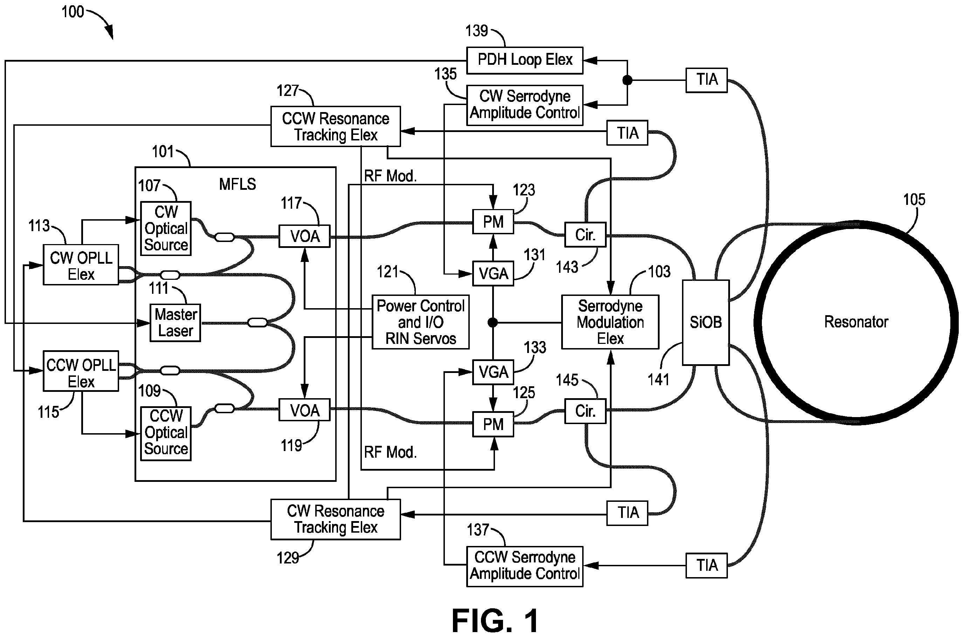

FIG. 1 is a block diagram of an RFOG 100 that implements serrodyne frequency shifting. As illustrated, the RFOG 100 includes a multi-frequency laser source (MFLS) 101. The MFLS 101 may generate optical signals. Further, the RFOG 100 includes multiple optical components (like mirrors, couplers, lenses, etc.) that couple the generated optical signals into the resonator. As illustrated, the MFLS 101 includes a CW optical source 107, a CCW optical source 109, and a master optical source 111. The RFOG 100 further includes a serrodyne modulation electronics 103 for providing serrodyne modulation signals for ramping the phase of the first slave optical signal and the second slave optical signal by respective serrodyne frequency shifting signals.

In certain embodiments, the RFOG 100 includes an MFLS 101 to provide the input optical signals to the fiber optic resonator coil 105, where the fiber optic resonator coil 105 in combination with input/output optics on a silicon optical bench 141 and paths between the coil and optics form a resonator within the RFOG 100. The MFLS 101 may include three semiconductor lasers: a master optical source 111, the CW optical source 107, and the CCW optical source 109. The master optical source 111 transmits a light wave locked to a resonance frequency of the resonator having the fiber optic resonator coil 105 using the well-known Pound-Drever-Hall (PDH) stabilization technique. The locking of the light wave to the resonance frequency is accomplished by coupling a portion of the light wave from the master optical source 111 into respective optical phase lock loop (OPLL) electronics for both the CW optical source 107 and the CCW optical source 109. For example, a portion of the light produced by the master optical source 111 is coupled into the CW OPLL electronics 113, and a portion of the light produced by the master optical source 111 is coupled into the CCW OPLL electronics 115. The CW OPLL electronics 113 includes electronics (like an optical filter) to drive the CW optical source 107 on the MFLS 101 at a desired optical frequency associated with a resonance frequency of the resonator having the fiber optic resonator coil 105. Similarly, the CCW OPLL electronics 115 includes electronics to drive the CCW optical source 109 on the MFLS 101 at a desired optical frequency associated with a resonance frequency of the resonator having the fiber optic resonator coil 105. As the optical signal produced by the master optical source 111 is coupled into both the CW OPLL electronics 113 and CCW OPLL electronics 115, the CW optical source 107 and the CCW optical source 109 are phase-locked to the frequency of the master optical source 111 plus frequency adjustments specific to the particular optical signals to keep the optical signals on resonance within the fiber optic resonator coil 105. Thus, the control signals from the CW OPLL electronics 113 and the CCW OPLL electronics 115 stabilize the relative frequencies of the CW and CCW optical signals. The terms CW and CCW are used herein as relative terms to indicate that the CW optical signal and the CCW optical signal propagate in opposite directions within the fiber optic resonator coil 105 and not to indicate that the CW optical signal propagates solely in the CW direction or that the CCW optical signal propagates solely in the CCW direction in other parts of the optical circuit other than the resonator.

In further embodiments, a portion of the CW optical signal produced by the CW optical source 107 is coupled into the CW OPLL electronics 113, and a portion is coupled into a CW variable optical attenuator (VOA) 117. Similarly, a portion of the CCW optical signal produced by the CCW optical source 109 is coupled into the CCW OPLL electronics 115, and a portion is coupled into a CCW VOA 119. The CW VOA 117 and the CCW VOA 119 receive control signals from a relative intensity noise (RIN) servo 121. The CW VOA 117 and the CCW VOA 119 attenuate the CW optical signal and the CCW optical signal to reduce fluctuations in the CW and CCW optical signals. The RIN servo 121 monitors (light detector not shown) the intensity of the optical signals produced by the CW optical source 107 and CCW optical source 109 to adjust the attenuation of the CW VOA 117 and the CCW VOA 119 to reduce the fluctuations of the light propagating within the fiber optic resonator coil 105.

In further implementations, the first optical signal and the second optical signal are then phase-modulated by respective phase modulators. For example, the CW optical signal is modulated by the CW phase modulator 123, and the CCW optical signal is modulated by the CCW phase modulator 125. As part of the phase modulation, each phase modulator receives an RF modulation signal that modulates the optical signals to apply a sideband heterodyne modulation. Additionally, the RF modulation signals may direct the different phase modulators to modulate their associated optical signals by different frequencies. For example, the RFOG 100 may include a CW resonance tracking electronics 129 and a CCW resonance tracking electronics 127. The CW resonance tracking electronics 129 and the CCW resonance tracking electronics 127 receive output signals from the fiber optic resonator coil 105 and demodulate optical signals received from the fiber optic resonator coil 105. The CW resonance tracking electronics 129 and CCW resonance tracking electronics 127 then respectively send control signals to the CW OPLL electronics 113 and CCW OPLL electronics 115, where the control signals represent adjustments to make to the frequency of the CW and CCW optical signals to keep the CW and CCW optical signal on CW and CCW resonance frequencies of the resonator having the fiber optic resonator coil 105, respectively.

In certain embodiments, in addition to the RF modulation signals received from the CW resonance tracking electronics 129 and the CCW resonance tracking electronics 127, the modulators may also apply serrodyne frequency shifting signals from the serrodyne modulation electronics 103. The serrodyne modulation electronics 103 receive serrodyne control signals from the CW resonance tracking electronics 129 and the CCW resonance tracking electronics 127. From the serrodyne control signals from the CW resonance tracking electronics 129 and the CCW resonance tracking electronics 127, the serrodyne modulation electronics 103 generates a serrodyne modulation control signal that can be altered to create the serrodyne modulation signals provided to the CW phase modulator 123 and the CCW phase modulator 125. When modulating by the serrodyne modulation signal, the CW phase modulator 123 modulates the CW optical signal by a serrodyne frequency signal having a phase slope that is opposite the phase slope of the serrodyne frequency signal that the CCW phase modulator 125 uses to modulate the CCW optical signal. Additionally, the serrodyne modulation electronics 103 periodically alternate the sign of the slope of the respective serrodyne frequency signals. For example, the serrodyne modulation electronics 103 may alternate the signs of the serrodyne modulation signals at a rate of 100 Hz, 200 Hz, or other switching rates.

In further embodiments, before providing the serrodyne modulation signal to the CW phase modulator 123 or the CCW phase modulator 125, the serrodyne modulation electronics 103 may provide a serrodyne modulation control signal to a voltage-controlled variable gain amplifier (VGA). For example, the serrodyne modulation electronics 103 may provide the serrodyne modulation control signal to a CW VGA 131 that controls the amplitude of the serrodyne modulation control signal to generate the serrodyne modulation signal applied to the CW optical signal. Additionally, the serrodyne modulation electronics 103 may provide the serrodyne modulation control signal to a CCW VGA 133 that controls the amplitude of the serrodyne modulation control signal to generate the serrodyne modulation signal applied to the CCW optical signal.

In some embodiments, the CW VGA 131 and the CCW VGA 133 receive control signals from serrodyne amplitude controllers that direct the CW VGA 131 and the CCW VGA 133 on how to control the amplitude of the serrodyne modulation signal received from the serrodyne modulation electronics 103. For example, a CW serrodyne amplitude controller 135 may send an amplitude control signal to the CW VGA 131, and a CCW serrodyne amplitude controller 137 may send an amplitude control signal to the CCW VGA 133. Each of the CW serrodyne amplitude controller 135 and the CCW serrodyne amplitude controller 137 may generate the respective amplitude control signals based on the associated optical signal detected at the reflection port of the resonator having the fiber optic resonator coil 105. After the CW VGA 131 and the CCW VGA 133 set the amplitude of the respective serrodyne modulation signals, the CW phase modulator 123 and the CCW phase modulator 125 use respective serrodyne modulation signals to phase modulate the CW optical signal and the CCW optical signal.

As illustrated, the CW phase modulator 123 and the CCW phase modulator 125 perform both the RF modulation from the CW resonance tracking electronics 129 and the CCW resonance tracking electronics 127 and the serrodyne modulation from the serrodyne modulation electronics 103. However, the RFOG 100 may only perform the serrodyne modulation from the serrodyne modulation electronics 103. Alternatively, the RFOG 100 may include separate phase modulators for performing the RF modulation and the serrodyne modulation electronics.

When the CW optical signal and the CCW optical signal have been phase-modulated, the phase-modulated CW optical signal and the phase-modulated CCW optical signal are respectively coupled into a first circulator 143 and a second circulator 145. The first circulator 143 and the second circulator 145 respectively circulate the CW optical signal and the CCW optical signal for coupling into the resonator coil 105 such that the CW optical signal and the CCW optical signal propagate in opposite directions within the fiber optic resonator coil 105. For example, the CW optical signal may propagate in the CW direction, and the CCW optical signal may propagate in the CCW direction. In some implementations, the first circulator 143 and the second circulator 145 provide the CW optical signal and the CCW optical signal to a silicon optical bench 141, where the silicon optical bench 141 couples the optical signals into the fiber optic resonator coil 105.

In some embodiments, the output from the reflection port of the resonator having the fiber optic resonator coil 105 for the first optical signal is provided to PDH loop electronics 139. The PDH loop electronics 139 then provides the feedback to the master optical source 111 for the PDH loop.

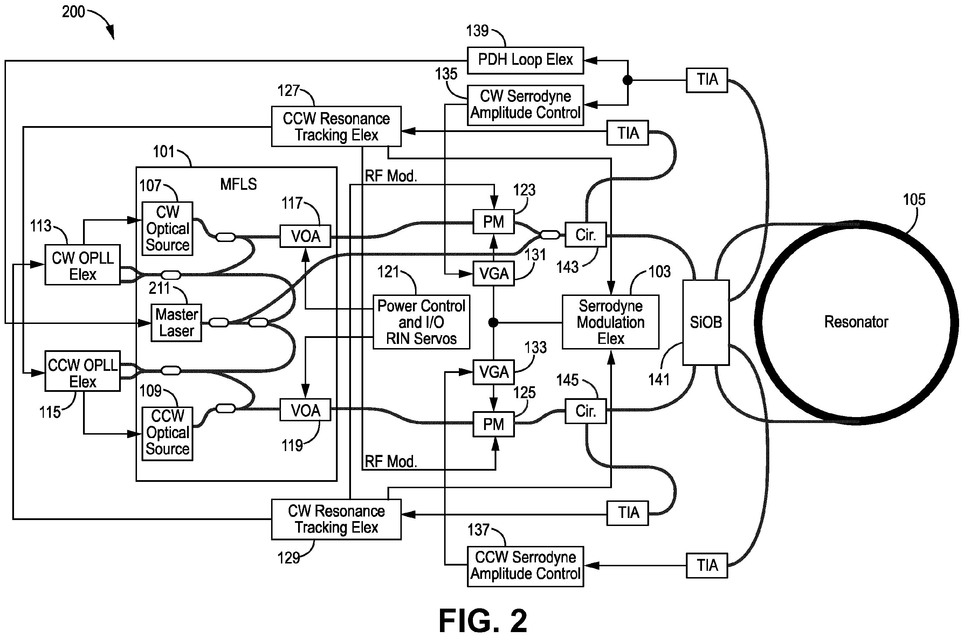

FIG. 2 is a block diagram of another exemplary RFOG 200 that implements serrodyne frequency shifting. As illustrated, the RFOG 100 includes similar components as those described above with respect to FIG. 1. For example, similarly numbered items in FIG. 2 perform similar functions as the components having similar numbers in FIG. 1. Accordingly, the difference between the RFOG 100 and the RFOG 200 is that the RFOG 200 includes a master laser 211 where the master laser is coupled into the resonator coil 105 where the master laser is coupled out of the fiber optic resonator coil 105 into the PDH loop electronics 139. Accordingly, the PDH loop electronics 139 drive the master laser to the resonance frequency of the resonator having the resonator coil 105. As with the RFOG 100 in FIG. 1, the RFOG 200 includes serrodyne modulation electronics 103 that provide serrodyne modulation control signals to a CW VGA 131 and a CCW VGA 133 for controlling the serrodyne frequency shifting.

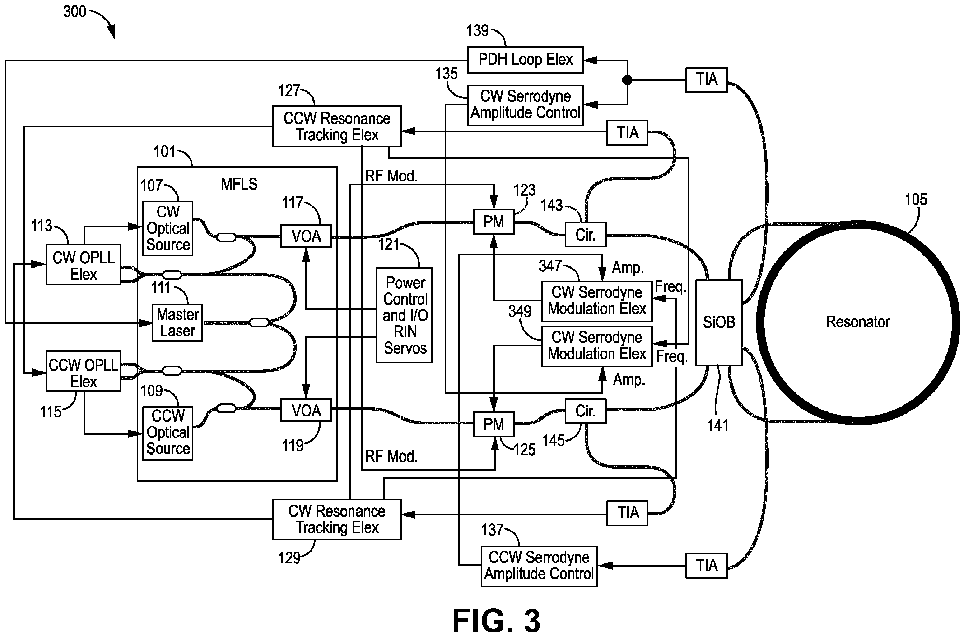

FIG. 3 is a block diagram of an RFOG 300 that implements serrodyne frequency shifting. As illustrated, the RFOG 300 includes similar components as those having similar numbers to those described above with respect to the RFOG 100 in FIG. 1. However, the RFOG 300 includes separate serrodyne modulation electronics that control both the frequency and amplitude for each optical path. For example, the RFOG 300 includes a CW serrodyne modulation electronics 347 and a CCW serrodyne modulation electronics 349. The CW serrodyne modulation electronics 347 receives the amplitude control signal from the CW serrodyne amplitude controller 135, and the CCW serrodyne modulation electronics 349 receives the amplitude control signal from the CCW serrodyne amplitude controller 137. The CW serrodyne modulation electronics 347 can control the frequency and amplitude of the serrodyne modulation signal provided to the CW phase modulator 123. Also, the CCW serrodyne modulation electronics 349 can control the frequency and amplitude of the serrodyne modulation signal provided to the CCW phase modulator 125.

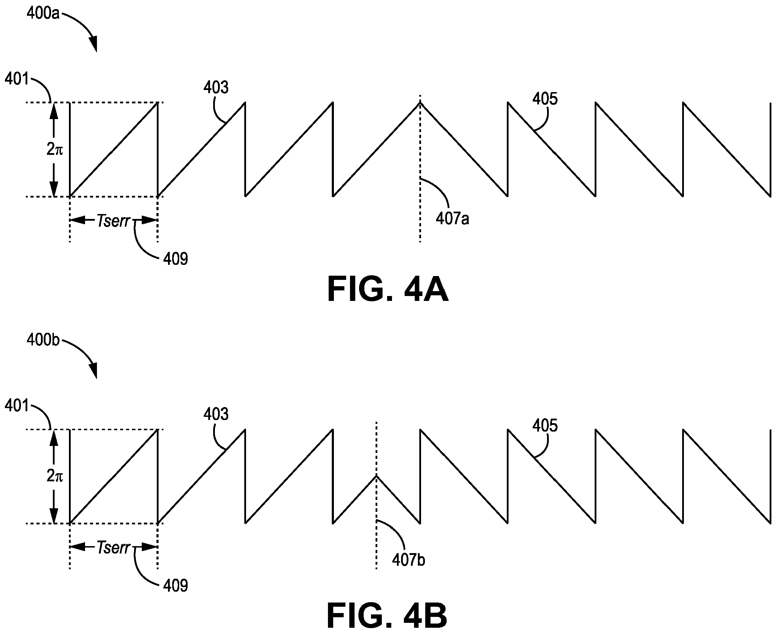

FIGS. 4A and 4B are diagrams illustrating graphs 400a and 400b of serrodyne waveforms provided to a single-phase modulator, such as that provided to one of the phase modulators 123 and 125. As shown, the serrodyne waveforms may be sawtooth waveforms, where each sawtooth waveform has a period 409 and an amplitude 401. Thus, the serrodyne waveform ramps up (or down) between a minimum and a maximum value according to a serrodyne frequency. As shown, the sawtooth waveform has an amplitude range of $2\pi$. Further, the sawtooth waveform may have a slope 403, which can be represented as $\frac{d\varphi}{dt}$. When the optical signal is modulated by the serrodyne waveform, the frequency of the optical signal shifts in proportion to the slope 403. In particular, the frequency of the optical signal shifts as follows: $f_{shift} = \frac{1}{2\pi}\frac{d\varphi}{dt}$. As shown, the slope 403 is equal to the amplitude 401 of the sawtooth waveform divided by the period 409 of the sawtooth waveform as follows: $\frac{d\varphi}{dt} = \frac{2\pi}{T_{serr}}$. Thus, the serrodyne frequency is equal to the reciprocal of the period 409 as follows:

$$f_{serr} = \frac{1}{T_{serr}}$$

. Therefore, the frequency shift of the optical signal is equal to the frequency of the serrodyne waveform as follows: $f_{shift} = f_{serr}$.

In certain embodiments, during the operation of the RFOG, the serrodyne waveform provided to a phase modulator will have a resonance frequency switch 407A. At a resonance frequency shift, the sign of the slope of the serrodyne waveform switches between negative and positive. For example, in the graph 400A, before the resonance frequency switch 407, the slope 403 is positive, and after the resonance frequency switch 407, the slope 405 is negative. At other resonance frequency switches, the slope of the serrodyne waveform switches from negative to positive. Further, the sign of the slope of the serrodyne waveform provided to the phase modulator 123 is opposite to the sign of the slope of the serrodyne waveform provided to the phase modulator 125. For example, when the slope of the serrodyne waveform provided to the CW phase modulator 123 is positive, the slope of the serrodyne waveform provided to the CCW phase modulator 125 is negative. After a resonance frequency switch 407, the slope of the serrodyne waveform applied by the CW phase modulator 123 is negative, and the slope of the serrodyne waveform applied by the CCW phase modulator 125 is positive. For each of the serrodyne waveforms, resonance frequency switches periodically occur. For example, the resonance frequency switches may occur at a rate of 100 Hz or some other rate.

In certain embodiments, as illustrated in FIG. 4A, the resonance frequency switch 407a illustrated in the graph 400a may occur at a maximum or minimum of the serrodyne waveform. Thus, the period of the resonance frequency switch 407a may be equal to a multiple of the period 409 of the serrodyne waveform. However, as illustrated in FIG. 4B, the resonance frequency switch 407b illustrated in the graph 400b may occur at other times during the period of the serrodyne waveform. Thus, the period of the resonance frequency switch 407a may not equal a multiple of the period 409 of the serrodyne waveform.

In certain embodiments, the CW phase modulator 123 applies the received serrodyne waveform such that the sign of the slope of the serrodyne waveform is opposite to the sign of the slope of the serrodyne waveform applied by the CCW phase modulator 125. For example, the phase modulators 123 and 125 may receive the same generated serrodyne waveform as an electrical signal. The phase modulators 123 and 125 may convert the received electrical signal into a phase. However, one of the phase modulators 123 and 125 may invert the received electrical signal, leading the slope of the phase to be negative. Alternatively, one of the phase modulators 123 and 125 may receive the electrical signal through a negative port and the other through a positive port.

Because the serrodyne waveforms applied by the phase modulators 123 and 125 have opposite slopes, the CW optical signal and the CCW optical signal may have different frequency shifts. For example, a resonator having the fiber optic resonator coil 105 may have an FSR of 500 kHz, and the serrodyne waveforms may modulate the CW optical signal and the CCW optical signal such that the frequencies of the optical signals are separated by four FSR or 2 MHz. As such, the slope of the serrodyne waveform may be set to frequency shift each optical signal by 1 MHz, but as the signs of the slopes of the different serrodyne waveforms are opposite to one another, the frequencies of the modulated CW and CCW optical signals will be separated by approximately two MHz or 4 FSR.

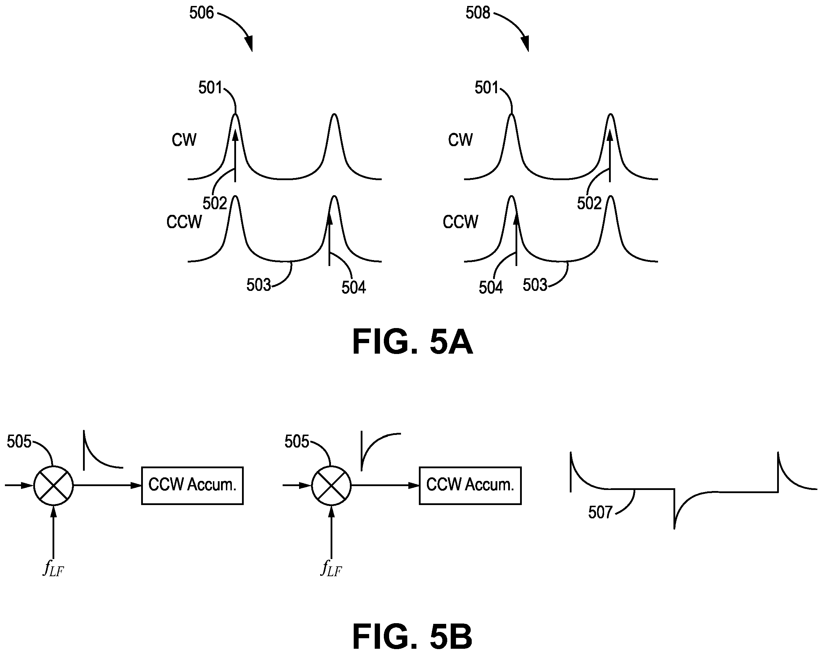

FIGs. 5A and 5B, along with FIG. 6, illustrate the performance of switching frequency amplitude error detection as performed by the CW resonance tracking electronics 129 and the CCW resonance tracking electronics 127. In particular, FIGs. 5A and 5B illustrate the effects of switching frequency amplitude errors as seen by a local demodulator within the CCW resonance tracking electronics 127. For example, line 501 illustrates the resonance peaks of the resonator having the fiber optic resonator coil 105 in the CW direction, and the line associated with the CW optical signal 502 illustrates the frequency of the CW optical signal. Similarly, line 503 illustrates the resonance peaks of the resonator having the fiber optic resonator coil 105 in the CCW direction, and the line associated with the CCW optical signal 504 illustrates the frequency of the CCW optical signal.

FIG. 5A illustrates two separate cases that are at the beginning of frequency switches. In the first moment 506, the CW optical signal 502 is in the lower resonance peak, and the CCW optical signal 504 is in the higher resonance peak due to the modulation performed by the serrodyne modulation. At the moment 506, the CW optical signal 502 is locked onto resonance, and the serrodyne frequency is less than an FSR. Thus, the CCW optical signal 504 is slightly off-resonance. Therefore, as the resonance tracking error signal for the CCW optical signal 504 deviates from zero, the feedback loop adjusts the frequency of the CCW optical signal 504 to be on resonance.

In the second moment 508, which occurs immediately after a frequency switch, both the CW optical signal 502 and the CCW optical signal 504 may be off-resonance. However, the PDH loop will quickly move the CW optical signal 502 onto resonance. As the resonance tracking error signal for the CCW optical signal 504 deviates from zero, the feedback loop adjusts the frequency of the CCW optical signal 504 to be on resonance.

As shown by way of example in FIG. 5B, when the CCW optical signal 504 is off-resonance, a CCW demodulator 505 in the CCW resonance tracking electronics 127 may produce an error signal that will cause the CCW resonance tracking electronics 127 to adjust the frequency of the CCW optical signal 504 to be on resonance. For example, when the CW optical signal 502 and the CCW optical signal 504 are modulated by a common modulation frequency, the CCW demodulator 505 may be demodulated by a low frequency used for the common modulation. When the CCW optical signal 504 is off due to the serrodyne frequency switching, the error signal that shows up at the output of the CCW demodulator 505 to adjust the serrodyne frequency so that the error control can be more quickly performed. Alternatively, when the CW optical signal 502 and the CCW optical signal 504 are not commonly modulated, electrical signals from the detected optical signals may be directly checked for error signals without demodulating by a common modulation frequency, while solely being demodulated by twice a sideband heterodyne frequency. Whether demodulated by a common modulation frequency, as shown in 507, spikes in the error signal correspond with frequency switching when the serrodyne frequency does not equal a multiple of the free spectral range. However, after the spikes in the error signal, the frequencies of the optical signals are adjusted such that the error signals move to zero.

FIG. 6 is a block diagram illustrating the serrodyne error correction 600 that is found in the CCW resonance tracking electronics 127. As shown, the serrodyne error correction 600 receives the signal produced by the CCW demodulator 505 in the CCW resonance tracking electronics 127. The serrodyne error correction 600 receives the error signal at a demodulator 605 and demodulates the signal using the switching frequency of the serrodyne frequency signal. If the demodulated signal goes to zero, it indicates that the pulses are not present in the provided error signal and that the serrodyne frequencies of the CW and CCW optical signals are at multiples of the FSR of the resonator having the fiber optic resonator coil 105. If the demodulated signal is not zero, an accumulator 607 accumulates the resultant error and outputs a correction signal that is added to a nominal serrodyne frequency 609 at a summer 611. The nominal serrodyne frequency is a value identified during the initial build and calibration loaded into a non-volatile memory on the gyroscope.

In certain embodiments, the summer 611 provides the summed signal as an output from the CCW resonance tracking electronics 127 coupled to the serrodyne modulation electronics 103. The serrodyne modulation electronics 103 may receive a similar summed signal from the CW resonance tracking electronics 129, represented as the CW serrodyne error signal 619. The serrodyne modulation electronics 103 may include an averager 615 that receives the CCW serrodyne error signal from the summer 611 and CW serrodyne error signal 619. The averager 615 then provides an output signal that is an average of its received inputs. The averager 615 averages the summed value from the summer 611 with the CW serrodyne error signal 619 provided by the CW resonance tracking electronics 129. The two optical signals are then averaged to calculate the desired serrodyne frequency. The averager 615 then provides the desired serrodyne frequency to a serrodyne ramp generator 617. The serrodyne ramp generator 617 generates a serrodyne modulation control signal used to create the serrodyne modulation signals used when performing the phase modulation at the phase modulators 123 and 125.

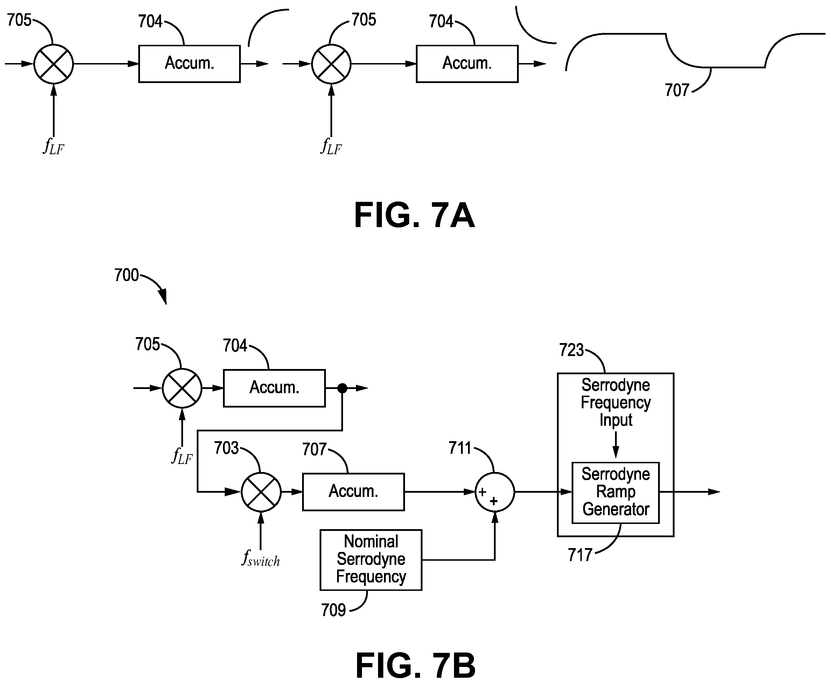

FIGs. 7A and 7B are diagrams illustrating an alternative embodiment to the embodiments described in FIGS. 5A, 5B, and 6. In particular, FIGs. 7A and 7B illustrate the performance of switching frequency amplitude error detection as performed by the CW resonance tracking electronics 129 and the CCW resonance tracking electronics 127. FIG. 7A illustrates the effects of switching frequency amplitude errors as seen within the CCW resonance tracking electronics 127 after passing through an accumulator 706.

As shown in FIG. 7A, when the CCW optical signal is off-resonance, a demodulator 705 in the CCW resonance tracking electronics 127 may produce an error signal that will cause the CCW resonance tracking electronics 127 to adjust the frequency of the CCW optical signal to be on resonance. For example, when the CW optical signal and the CCW optical signal are modulated by a common modulation frequency, the CCW demodulator 705 may demodulate the received signal by a low frequency that was used for the common modulation. When the CCW optical signal is off due to the serrodyne frequency switching, the error signal produced by the demodulator 705 may be accumulated by an accumulator 704, and the accumulated signal can be used to adjust the serrodyne frequency. Alternatively, when the CW optical signal and the CCW optical signal are not commonly modulated, electrical signals from the detected optical signals may be accumulated at the accumulator 704 without demodulating by a common modulation frequency, while solely being demodulated by twice a sideband modulation frequency. Whether demodulated by a common modulation frequency, as shown in 705, each change is represented by either a decrease in the error signal or an increase in the error signal which sends the accumulator (704) output towards an asymptote. As the error signal begins to increase or decrease, the frequencies of the optical signals are adjusted such that the error signals move toward an asymptotic value.

FIG. 7B is a block diagram illustrating the serrodyne error correction 700 that is found in the CCW resonance tracking electronics 127, though a similar serrodyne error correction may also be performed within the CW resonance tracking electronics 129. As shown, the serrodyne error correction 700 receives the signal that is produced by the accumulator 704 in the CCW resonance tracking electronics 127. The serrodyne error correction 700 receives the error signal at a demodulator 703 and demodulates the signal using the switching frequency of the serrodyne frequency signal. If the demodulated signal goes to zero, it indicates that the pulses are not present in the provided error signal and that the serrodyne frequency of the CCW optical signal is at a multiple of the FSR of the resonator having the fiber optic resonator coil 105. If the demodulated signal is not zero, an accumulator 707 accumulates the resultant error and outputs a correction signal that is added to a nominal serrodyne frequency 709 at a summer 711. The nominal serrodyne frequency 709 is a value identified during the initial build and calibration loaded into a non-volatile memory on the gyroscope.

In certain embodiments, the summer 711 provides the summed signal as an output from the CCW resonance tracking electronics 127 coupled to the serrodyne modulation electronics 723. The serrodyne modulation electronics 723 may function in a similar manner to the CW serrodyne modulation electronics 347 or the CCW serrodyne modulation electronics 349 in FIG. 3. The serrodyne modulation electronics 723 may include a serrodyne ramp generator 717 that receives the summed signal from the summer 711. The serrodyne ramp generator 717 generates a serrodyne modulation control signal used to create the serrodyne modulation signals used when performing the phase modulation of the associated optical signal. Accordingly, some systems may have separate electronics for generating control signals for the associated optical signals.

FIG. 8 illustrates the serrodyne frequency switching within the resonator having the fiber optic resonator coil 105. As illustrated, the loops 805 correspond to the propagation of a signal around the resonator having the fiber optic resonator coil 105 before a resonance switch, and the loop 803 corresponds to the propagation of a signal around the resonator having the resonator coil 105 after the resonance switch. The regions 801 correspond to the $2\pi$ resets within the generated serrodyne signal. As illustrated, the signal will propagate around one-half of the fiber optic resonator coil 105 during the period of the serrodyne waveform. Thus, the signal will have two $2\pi$ resets within a round trip of the coil, corresponding to round trip time 807. Further, at each of the $2\pi$ resets at the regions 801, the signal is briefly corrupted, as shown at corrupted region 809. The signal may be gated out to avoid the impacts of the corrupted region. Additionally, after a resonance switch, a beat signal with a frequency of four times the FSR may propagate within the resonator having the fiber optic resonator coil 105 until the fiber optic resonator coil 105 is purged with the light having the old frequency. The signal may also be gated for the period of time 811, corresponding to the presence of the beat signal that exists after a resonance switch.

FIG. 9 is a block diagram of an RFOG 900 that implements serrodyne frequency shifting. As illustrated, the RFOG 900 includes similar components as those having similar numbers to those described above with respect to the RFOG 100 in FIG. 1. However, the RFOG 900 does not include dedicated amplitude controllers like the CW serrodyne amplitude controller 135 and CCW serrodyne amplitude controller 137. Rather, the RFOG 900 includes CW resonance tracking electronics 929 and CCW resonance tracking electronics 927. As such, the CW resonance tracking electronics 929 and CCW resonance tracking electronics 927 receive information from the transmission ports of the resonator having the fiber optic resonator coil 105 and respectively generate amplitude control signals that are respectively provided to the CW VGA 131 and the CCW VGA 133 to control the amplitude of the serrodyne electrical signals.

FIG. 10 is a block diagram of an RFOG 1000 that implements serrodyne frequency shifting. As illustrated, the RFOG 1000 includes similar components as those having similar numbers to those described above with respect to the RFOG 100 in FIG. 1. However, the RFOG 1000 does not include the CW optical source 107 and the CCW optical source 109, and only includes the master laser 1011, which light is split and coupled into both the CW VOA 1017 and the CCW VOA 1019. The CW VOA 1017 couples light into the CW phase modulator 123, and the CCW VOA 1019 couples light into the CCW phase modulator 125.

In certain embodiments, the optical signals introduced into the resonator coil 105 may be modulated by common modulation. In some implementations, the optical signals may be commonly modulated by a piezoelectric transducer (PZT) 1053 that receives a modulation signal derived from a frequency source 1055 at a common modulation frequency lower than the sideband heterodyne frequency. The modulation signal derived from the frequency source 1055 causes the PZT 1053 to expand and contract at the modulation frequency. As some of the coils of the resonator coil 105 are wrapped around the PZT 1053, the expansion and contraction of the PZT 1053 at the modulation frequency causes the frequency resonant lengths of the resonator having the resonator coil 105 to change at the common modulation frequency. The changing path length of the resonator coil 105 then modulates the optical signals propagating within the resonator having the resonator coil 105.

Additionally, before being received by the PDH Loop electronics 139, the RFOG 1000 may include a modulation stripper 1057. The modulation stripper 1057 may strip the common modulation from at least one of the signals received from the transmission ports of the resonator having the resonator coil 105. The modulation stripper 1057 removes the common modulation applied to the counter-propagating signals so the PDH loop electronics can properly drive the optical signal provided by the master laser 1011 to the resonant frequencies of the resonator having resonator coil 105.

Further, the RFOG 1000 includes first resonance tracking electronics 1027 that receives information from the transmission port of the resonator having the fiber optic resonator coil 105 and generates a serrodyne feedback control signal to the serrodyne modulation electronics 1003. The serrodyne modulation electronics 1003 provides a serrodyne signal to the CW VGA 131 and the CCW VGA 133. In the RFOG 1000, the serrodyne modulation electronics 1003 sends the same frequency to both combinations of the VGA and phase modulators but sends an inverted ramp polarity to one combination as compared to the other combination. Further, the serrodyne modulation electronics 1003 controls the switching of the polarity between the different combinations when a resonance switch occurs.

Additionally, the second resonance tracking electronics 1029 provides a feedback signal to the PDH loop electronics 1039, which feedback functions as a PDH servo setpoint control (controls the setpoint of the PDH loop for centering the optical signal produced by the 1011 between resonances of the resonator having the resonator coil 105 in the CW direction. Further, the RFOG 1000 includes a beat note detector 1051 that takes a portion of the CW and CCW input beams (picked off by couplers) and interferes the received beams to identify harmonics that indicate deviations from the serrodyne peak height from $2\pi$ and adjusts each VGA to achieve the desired $2\pi$ amplitudes. The RFOG may be manually, or factory adjusted over a temperature range to identify tuning characteristics of the VGA, wherein a lookup table could be provided to the RFOG to facilitate the tuning of the VGAs.

FIG. 11 is a flowchart of a method 1100 for implementing serrodyne resonance switching. As shown, the method 1100 proceeds at 1101, where at least one optical signal is produced. Further, the method 1100 proceeds at 1103, where a first optical signal derived from the at least one optical signal and a second optical signal derived from the at least one optical signal are introduced for propagation within a fiber optic resonator. Moreover, the method 1100 proceeds at 1105, where at least one serrodyne modulation control signal is generated wherein a first serrodyne modulation signal and a second serrodyne modulation signal are generated from the at least one serrodyne modulation control signal.

Additionally, the method 1100 proceeds at 1107, where a sign of a slope of the first serrodyne modulation signal and a sign of a slope of the second serrodyne modulation signal is periodically switched. Also, the method 1100 proceeds at 1109, where the first optical signal is phase modulated with the first serrodyne modulation signal before the first optical signal propagates within the fiber optic resonator. Further, the method 1100 proceeds at 1111, where the second optical signal is phase modulated with the second serrodyne modulation signal before the second optical signal propagates within the fiber optic resonator.

*Example Embodiments*

Example 1 includes a resonator fiber optic gyroscope (RFOG), comprising: a fiber optic resonator; at least one optical signal source configured to produce at least one optical signal; a plurality of optical components configured to introduce a first optical signal derived from the at least one optical signal and a second optical signal derived from the at least one optical signal for propagation within the fiber optic resonator wherein the first optical signal and the second optical signal propagate in opposite directions; serrodyne modulation electronics configured to generate at least one serrodyne modulation control signal, wherein a first serrodyne modulation signal and a second serrodyne modulation signal are generated from the at least one serrodyne modulation control signal, wherein a sign of a slope of the first serrodyne modulation signal is opposite a sign of a slope of the second serrodyne modulation signal, wherein the sign of the slope of the first serrodyne modulation signal and the sign of the slope of the second serrodyne modulation signal periodically switch; a first phase modulator configured to phase modulate the first optical signal with the first serrodyne modulation signal before the first optical signal propagates within the fiber optic resonator; and a second phase modulator configured to phase modulate the second optical signal with the second serrodyne modulation signal before the second optical signal propagates within the fiber optic resonator.

Example 2 includes the RFOG of Example 1, further comprising: first resonance tracking electronics configured to control a frequency of the first optical signal; and second resonance tracking electronics configured to control a frequency of the second optical signal; wherein the serrodyne modulation electronics receives at least one of a first serrodyne control signal from the first resonance tracking electronics and a second serrodyne control signal from the second resonance tracking electronics.

Example 3 includes the RFOG of Example 2, wherein the RFOG further comprises: a first serrodyne amplitude controller configured to produce a first amplitude control signal; and a second serrodyne amplitude controller configured to produce a second amplitude control signal.

Example 4 includes the RFOG of Example 3, further comprising: a first variable gain amplifier configured to receive the at least one serrodyne modulation control signal to produce the first serrodyne modulation signal from the at least one serrodyne modulation control signal based on the first amplitude control signal; and a second variable gain amplifier configured to receive the at least one serrodyne modulation control signal to produce the second serrodyne modulation signal from the at least one serrodyne modulation control signal based on the second amplitude control signal.

Example 5 includes the RFOG of any of Examples 3-4, wherein the serrodyne modulation electronics comprises: a first serrodyne modulation electronics configured to receive the first amplitude control signal and the first serrodyne control signal, and produce the first serrodyne modulation signal based on the first amplitude control signal and the first serrodyne control signal; and a second serrodyne modulation electronics configured to receive the second amplitude control signal and the second serrodyne control signal, and produce the second serrodyne modulation signal based on the second amplitude control signal and the second serrodyne control signal.

Example 6 includes the RFOG of any of Examples 2-5, further comprising: a first variable gain amplifier configured to receive the at least one serrodyne modulation control signal to produce the first serrodyne modulation signal; and a second variable gain amplifier configured to receive the at least one serrodyne modulation control signal to produce the second serrodyne modulation signal.

Example 7 includes the RFOG of Example 6, wherein the at least one serrodyne modulation control signal comprises a first modulation control signal and a second modulation control signal produced by the serrodyne modulation electronics based on at least one of the first serrodyne control signal and the second serrodyne control signal; wherein the first variable gain amplifier receives the first modulation control signal; and wherein the second variable gain amplifier receives the second modulation control signal.

Example 8 includes the RFOG of any of Examples 6-7, wherein: the first variable gain amplifier receives a first amplitude control signal from the first resonance tracking electronics and produces the first serrodyne modulation signal based on the first amplitude control signal and the at least one serrodyne modulation control signal; and the second variable gain amplifier receives a second amplitude control signal from the second resonance tracking electronics and produces the second serrodyne modulation signal based on the second amplitude control signal and the at least one serrodyne modulation control signal.

Example 9 includes the RFOG of any of Examples 2-8, wherein the serrodyne modulation electronics comprise a serrodyne ramp generator that generates the at least one serrodyne modulation control signal based on an error signal produced from at least one of the first resonance tracking electronics and the second resonance tracking electronics.

Example 10 includes the RFOG of any of Examples 1-9, wherein the at least one optical signal source comprises a single optical signal source that produces a single optical signal that is coupled into the first phase modulator and the second phase modulator.

Example 11 includes the RFOG of any of Examples 1-10, wherein the first serrodyne modulation signal is a sawtooth waveform that ramps up or down within an amplitude range at a serrodyne frequency.

Example 12 includes the RFOG of Example 11, wherein the periodic switching of the sign of the first serrodyne modulation signal and the second serrodyne modulation signal occurs at a multiple of the serrodyne frequency.

Example 13 includes a system, comprising: a fiber optic resonator; at least one optical signal source configured to produce at least one optical signal; a plurality of optical components configured to introduce a first optical signal derived from the at least one optical signal and a second optical signal derived from the at least one optical signal for propagation within the fiber optic resonator wherein the first optical signal and the second optical signal propagate in opposite directions; first resonance tracking electronics configured to control a frequency of the first optical signal; second resonance tracking electronics configured to control a frequency of the second optical signal; serrodyne modulation electronics configured to receive at least one of a first serrodyne control signal from the first resonance tracking electronics and a second serrodyne control signal from the second resonance tracking electronics; wherein the serrodyne modulation electronics are further configured to generate at least one serrodyne modulation control signal, wherein a first serrodyne modulation signal and a second serrodyne modulation signal are generated from the at least one serrodyne modulation control signal, wherein a sign of a slope of the first serrodyne modulation signal is opposite a sign of a slope of the second serrodyne modulation signal, wherein the sign of the slope of the first serrodyne modulation signal and the sign of the slope of the second serrodyne modulation signal periodically switch; a first phase modulator configured to phase modulate the first optical signal with the first serrodyne modulation signal before the first optical signal propagates within the fiber optic resonator; and a second phase modulator configured to phase modulate the second optical signal with the second serrodyne modulation signal before the second optical signal propagates within the fiber optic resonator.

Example 14 includes the system of Example 13, further comprising: a first serrodyne amplitude controller configured to produce a first amplitude control signal; and a second serrodyne amplitude controller configured to produce a second amplitude control signal.

Example 15 includes the system of Example 14, further comprising: a first variable gain amplifier configured to receive the at least one serrodyne modulation control signal to produce the first serrodyne modulation signal from the at least one serrodyne modulation control signal based on the first amplitude control signal; and a second variable gain amplifier configured to receive the at least one serrodyne modulation control signal to produce the second serrodyne modulation signal from the at least one serrodyne modulation control signal based on the second amplitude control signal.

Example 16 includes the system of any of Examples 14-15, wherein the serrodyne modulation electronics comprises: a first serrodyne modulation electronics configured to receive the first amplitude control signal and the first serrodyne control signal, and produce the first serrodyne modulation signal based on the first amplitude control signal and the first serrodyne control signal; and a second serrodyne modulation electronics configured to receive the second amplitude control signal and the second serrodyne control signal, and produce the second serrodyne modulation signal based on the second amplitude control signal and the second serrodyne control signal.

Example 17 includes the system of any of Examples 13-16, further comprising: a first variable gain amplifier configured to receive the at least one serrodyne modulation control signal to produce the first serrodyne modulation signal; and a second variable gain amplifier configured to receive the at least one serrodyne modulation control signal to produce the second serrodyne modulation signal.

Example 18 includes the system of Example 17, wherein the at least one serrodyne modulation control signal comprises a first modulation control signal and a second modulation control signal produced by the serrodyne modulation electronics based on at least one of the first serrodyne control signal and the second serrodyne control signal; wherein the first variable gain amplifier receives the first modulation control signal; and wherein the second variable gain amplifier receives the second modulation control signal.

Example 19 includes the system of any of Examples 17-18, wherein: the first variable gain amplifier receives a first amplitude control signal from the first resonance tracking electronics and produces the first serrodyne modulation signal based on the first amplitude control signal and the at least one modulation control signal; and the second variable gain amplifier receives a second amplitude control signal from the second resonance tracking electronics and produces the second serrodyne modulation signal based on the second amplitude control signal and the at least one modulation control signal.

Example 20 includes a method, comprising: producing at least one optical signal; introducing a first optical signal derived from the at least one optical signal and a second optical signal derived from the at least one optical signal for propagation within a fiber optic resonator wherein the first optical signal and the second optical signal propagate in opposite directions; generating at least one serrodyne modulation control signal, wherein a first serrodyne modulation signal and a second serrodyne modulation signal are generated from the at least one serrodyne modulation control signal, wherein a sign of a slope of the first serrodyne modulation signal is opposite a sign of a slope of the second serrodyne modulation signal; periodically switching the sign of the slope of the first serrodyne modulation signal and the sign of the slope of the second serrodyne modulation signal; phase modulating the first optical signal with the first serrodyne modulation signal before the first optical signal propagates within the fiber optic resonator; and phase modulating the second optical signal with the second serrodyne modulation signal before the second optical signal propagates within the fiber optic resonator.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1. A resonator fiber optic gyroscope (RFOG), comprising:

    a fiber optic resonator (105);
    at least one optical signal source configured to produce at least one optical signal;
    a plurality of optical components configured to introduce a first optical signal derived from the at least one optical signal and a second optical signal derived from the at least one optical signal for propagation within the fiber optic resonator (105) wherein the first optical signal and the second optical signal propagate in opposite directions;
    serrodyne modulation electronics (103) configured to generate at least one serrodyne modulation control signal, wherein a first serrodyne modulation signal and a second serrodyne modulation signal are generated from the at least one serrodyne modulation control signal, wherein a sign of a slope of the first serrodyne modulation signal is opposite a sign of a slope of the second serrodyne modulation signal, wherein the sign of the slope of the first serrodyne modulation signal and the sign of the slope of the second serrodyne modulation signal periodically switch;
    a first phase modulator (123) configured to phase modulate the first optical signal with the first serrodyne modulation signal before the first optical signal propagates within the fiber optic resonator (105); and
    a second phase modulator (125) configured to phase modulate the second optical signal with the second serrodyne modulation signal before the second optical signal propagates within the fiber optic resonator (105).

2. The RFOG of claim 1, further comprising:

    first resonance tracking electronics (129) configured to control a frequency of the first optical signal; and
    second resonance tracking electronics (127) configured to control a frequency of the second optical signal;
    wherein the serrodyne modulation electronics (103) receives at least one of a first serrodyne control signal from the first resonance tracking electronics (129) and a second serrodyne control signal from the second resonance tracking electronics (127).

3. The RFOG of claim 2, wherein the RFOG further comprises:

    a first serrodyne amplitude controller (135) configured to produce a first amplitude control signal; and
    a second serrodyne amplitude controller (137) configured to produce a second amplitude control signal.

4. The RFOG of claim 3, further comprising:

    a first variable gain amplifier (131) configured to receive the at least one serrodyne modulation control signal to produce the first serrodyne modulation signal from the at least one serrodyne modulation control signal based on the first amplitude control signal; and
    a second variable gain amplifier (133) configured to receive the at least one serrodyne modulation control signal to produce the second serrodyne modulation signal from the at least one serrodyne modulation control signal based on the second amplitude control signal.

5. The RFOG of claim 3, wherein the serrodyne modulation electronics (103) comprises:

a first serrodyne modulation electronics (347) configured to receive the first amplitude control signal and the first serrodyne control signal, and produce the first serrodyne modulation signal based on the first amplitude control signal and the first serrodyne control signal; and
a second serrodyne modulation electronics (349) configured to receive the second amplitude control signal and the second serrodyne control signal, and produce the second serrodyne modulation signal based on the second amplitude control signal and the second serrodyne control signal.

6. The RFOG of claim 2, further comprising:

a first variable gain amplifier (131) configured to receive the at least one serrodyne modulation control signal to produce the first serrodyne modulation signal; and
a second variable gain amplifier (133) configured to receive the at least one serrodyne modulation control signal to produce the second serrodyne modulation signal.

7. The RFOG of claim 6, wherein the at least one serrodyne modulation control signal comprises a first modulation control signal and a second modulation control signal produced by the serrodyne modulation electronics (103) based on at least one of the first serrodyne control signal and the second serrodyne control signal;

wherein the first variable gain amplifier (131) receives the first modulation control signal; and
wherein the second variable gain amplifier (133) receives the second modulation control signal.

8. The RFOG of claim 6, wherein:

the first variable gain amplifier (131) receives a first amplitude control signal from the first resonance tracking electronics (929) and produces the first serrodyne modulation signal based on the first amplitude control signal and the at least one serrodyne modulation control signal; and
the second variable gain amplifier (133) receives a second amplitude control signal from the second resonance tracking electronics (927) and produces the second serrodyne modulation signal based on the second amplitude control signal and the at least one serrodyne modulation control signal.

9. The RFOG of claim 1, wherein the at least one optical signal source comprises a single optical signal source (1011) that produces a single optical signal that is coupled into the first phase modulator (123) and the second phase modulator (125);
wherein the first serrodyne modulation signal is a sawtooth waveform that ramps up or down within an amplitude range at a serrodyne frequency, wherein the periodic switching of the sign of the first serrodyne modulation signal and the second serrodyne modulation signal occurs at a multiple of the serrodyne frequency.

10. A method, comprising:

producing at least one optical signal;
introducing a first optical signal derived from the at least one optical signal and a second optical signal derived from the at least one optical signal for propagation within a fiber optic resonator (105) wherein the first optical signal and the second optical signal propagate in opposite directions;
generating at least one serrodyne modulation control signal, wherein a first serrodyne modulation signal and a second serrodyne modulation signal are generated from the at least one serrodyne modulation control signal, wherein a sign of a slope of the first serrodyne modulation signal is opposite a sign of a slope of the second serrodyne modulation signal;
periodically switching the sign of the slope of the first serrodyne modulation signal and the sign of the slope of the second serrodyne modulation signal;
phase modulating the first optical signal with the first serrodyne modulation signal before the first optical signal propagates within the fiber optic resonator (105); and
phase modulating the second optical signal with the second serrodyne modulation signal before the second optical signal propagates within the fiber optic resonator (105).

**FIG. 1**

FIG. 2

FIG. 3

FIG. 4A

FIG. 4B

FIG. 5A

FIG. 5B

FIG. 6

**FIG. 7A**

**FIG. 7B**

**FIG. 8**

EP 4 506 661 A1

**FIG. 9**

EP 4 506 661 A1

FIG. 10

1100

**1101** Produce at least one optical signal

**1103** Introduce a first optical signal derived from the at least one optical signal and a second optical signal derived from the at least one optical signal for propagation within a fiber optic resonator

**1105** Generate at least one serrodyne modulation control signal, wherein a first serrodyne modulation signal and a second serrodyne modulation signal are generated from the at least one serrodyne modulation control signal

**1107** Periodically switch a sign of a slope of the first serrodyne modulation signal and a sign of a slope of the second serrodyne modulation signal

**1109** Phase modulate the first optical signal with the first serrodyne modulation signal before the first optical signal propagates within the fiber optic resonator

**1111** Phase modulate the second optical signal with the second serrodyne modulation signal before the second optical signal propagates within the fiber optic resonator

# FIG. 11

Europäisches
Patentamt

European
Patent Office

Office européen
des brevets

# EUROPEAN SEARCH REPORT

Application Number

EP 24 17 9797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUHUI YU ET AL: "Resonator fiber optic gyroscope with an all digitalized system", SYSTEMS AND CONTROL IN AERONAUTICS AND ASTRONAUTICS (ISSCAA), 2010 3RD INTERNATIONAL SYMPOSIUM ON, IEEE, PISCATAWAY, NJ, USA, 8 June 2010 (2010-06-08), pages 815-818, XP031799375, DOI: 10.1109/ISSCAA.2010.5633090 ISBN: 978-1-4244-6043-4 * abstract * * figures 1, 2 * * I. Introduction * * II. System configuration * * III. Backscattering noise reducing and experiments * | 1-3,9,10 | INV. G01C19/72 |
| X | WANG XIJING ET AL: "Closed loop resonator fiber optic gyro with precisely controlled bipolar digital serrodyne modulation", THIRD ASIA PACIFIC OPTICAL SENSORS CONFERENCE, SPIE, 1000 20TH ST. BELLINGHAM WA 98225-6705 USA, vol. 8351, no. 1, 31 January 2012 (2012-01-31), pages 1-7, XP060001194, DOI: 10.1117/12.914427 [retrieved on 1901-01-01] * abstract * * figures 3, 4 * * 1. Introduction * * 2. Principle * * 3.1 Improved backscattering reduction with precise amplitude control via gain controllable amplifier * | 1-10 | |

TECHNICAL FIELDS SEARCHED (IPC)

G01C

-/--

The present search report has been drawn up for all claims

| Place of search | Date of completion of the search | Examiner |
|---|---|---|
| The Hague | 7 November 2024 | Toth, Rémy |

EPO FORM 1503 03.82 (P04C01)

**EUROPEAN SEARCH REPORT**

Application Number

EP 24 17 9797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YING DIQING ET AL: "A closed-loop RFOG based on digital serrodyne and sine modulations with two LiNbO3 phase modulators", OPTICS COMMUNICATIONS, ELSEVIER, AMSTERDAM, NL, vol. 452, 18 July 2019 (2019-07-18), pages 151-157, XP085793886, ISSN: 0030-4018, DOI: 10.1016/J.OPTCOM.2019.07.036 [retrieved on 2019-07-18] * abstract * * figures 1, 2, 4 * | 9 | |
| A | TU JUNYU ET AL: "Triple Closed-Loop Resonant Fiber Optic Gyroscope", 2019 18TH INTERNATIONAL CONFERENCE ON OPTICAL COMMUNICATIONS AND NETWORKS (ICOCN), IEEE, 5 August 2019 (2019-08-05), pages 1-3, XP033675624, DOI: 10.1109/ICOCN.2019.8934119 [retrieved on 2019-12-16] * abstract * * figure 1 * * 1. Introduction * * 2. Principles and system design * | 1-10 | TECHNICAL FIELDS SEARCHED (IPC) |

The present search report has been drawn up for all claims

| Place of search | Date of completion of the search | Examiner |
|---|---|---|
| The Hague | 7 November 2024 | Toth, Rémy |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 63518863 A